# EUROPEAN PATENT APPLICATION

(11) **EP 4 346 162 A1**
(43) Date of publication of application: **03.04.2024**
(21) Application number: 22198123.6
(22) Date of filing: 27.09.2022
(51) Int. Cl.: H04L 9/32, H04L 9/40, G06F 21/33, H04N 21/00

(54) **PROTECTION AGAINST UPLOAD OF NON-OWNED CONTENT TO A CDN**

(71) Applicant: Nagravision Sàrl, 1033 Cheseaux-sur-Lausanne (CH)
(72) Inventor: STRANSKY-HEILKRON, Philippe, 1233 Cheseaux-sur-Lausanne (CH); PIRON, Laurent, 1233 Cheseaux-sur-Lausanne (CH)
(74) Representative: Novagraaf International SA

(57) **Abstract**

The method of uploading a digital content from a content provider (CP) to a content transmission network (100), such as a CDN, responsible for transmitting contents to user devices (20), comprises the following steps:
- transmitting a request for a legitimation token for said digital content from the content provider (CP) to a certificate authority (30);
- upon successful authentication of the content provider (CP) by the certificate authority (30), receiving by the content provider (CP) the legitimation token from the certificate authority (30), wherein said legitimation token includes a content tag and an identifier of the content provider (CP) and is digitally signed by the certificate authority (30);
- uploading the digital content and the legitimation token from the content provider (CP) to the content transmission network (100.)

## Description

### TECHNICAL FIELD

The present disclosure relates to the field of digital content streaming or distribution over a transmission network or system.

### BACKGROUND

Many operators providing services of content delivery use CDN (Content Delivery Network) operators to deliver their contents to end users.

A content delivery network, or content distribution network (CDN), is a geographically distributed network of proxy servers and data centers. They have the role of distributing the content distribution service spatially relative to end users. The contents distributed over a CDN may be of various types such as video contents, audio contents, texts, graphics, scripts, data files, software, documents, applications, live streaming contents, on-demand streaming contents, etc...

Content owners or providers may use CDN operators to deliver contents to end users. Schematically, a CDN has an upload interface for uploading or ingesting contents that are transmitted from content owners, and a download interface to transmit contents to end users. The upload interface may be protected by a security mechanism based on authentication tokens transmitted by the content owners to the CDN. The download interface may be protected by another security mechanism based on access tokens transmitted by the end users to the CDN. This allows to protect access to the CDN through both upload and download interfaces.

Content protection is deferred to the use of DRM systems. Typically, the contents distributed by the CDN operators are encrypted with content keys. The end users receive encrypted contents and need to acquire a DRM license embedding the content key from a DRM server to decrypt them.

Many pirate operators offer content distribution services as if they were legitimate content operators. For example, a pirate operator may upload illegitimate contents to a CDN as a legitimate content operator. Then, the illegitimate contents can be distributed to end users over the CDN.

Therefore, there is a need for improving the situation. In particular, it is desired to prevent a pirate operator from distributing illegitimate contents through a transmission network.

### SUMMARY

The present disclosure concerns a method of uploading a digital content from a content provider to a content transmission network responsible for transmitting contents to user devices , comprising the following steps:
- transmitting a request for a legitimation token for said digital content from the content provider to a certificate authority ;
- upon successful authentication of the content provider by the certificate authority, receiving by the content provider the legitimation token from the certificate authority, wherein said legitimation token includes a content tag, uniquely assigned to the digital content, together with an identifier of the content provider and is digitally signed by the certificate authority;
- uploading the digital content and the legitimation token for said digital content from the content provider to the content transmission network.

The present method allows to limit capabilities of pirate operators to distribute illegitimate contents through a transmission network, such as a content distribution network or CDN, by adding a verification of the legitimate character of the uploaded contents when they are uploaded from a content provider to the transmission network. According to the present disclosure, a content and a legitimation token should be uploaded from a content provider to the content transmission network. Said legitimation token corresponds to a certificate of legitimation or reputation relative to the content. It contains a content tag and a content provider identifier and is digitally signed by a certificate authority that has authenticated the content provider. In this way, the uploaded content has a legitimation token or certificate that legitimates the origin, integrity, and reputation of the content.

In an embodiment, the method may further comprise a step of verifying, by a control node of the content transmission network, the validity of the received legitimation token and, only if the received legitimation token is valid, a step of making the received content available to the content transmission network for transmission to user devices

The control node may be an origin server in the transmission network or CDN. Thus, the control node may verify the legitimate character of the uploaded content by verifying that said uploaded content has a legitimation token and, in a positive event, that this legitimation token is valid. In case of successful verification, the content may be made available to the content transmission network, for example to edge servers for distribution of the content to end user devices.

In an embodiment, the step of verifying the validity of the legitimation token may include transmitting the received legitimation token to the certificate authority with a request for verifying the validity of said legitimation token and, in response, receiving an acknowledgement of validity.

In an embodiment, the request for a legitimation token for said digital content transmitted from the content provider to the certificate authority may include an identifier of the digital content.

It is not necessary to transmit the content from the content provider to the certificate authority.

In an embodiment, the method may further comprise, upon reception of the request for a legitimation token from the content provider, a step of generating, by the certificate authority, the requested legitimation token, prior to transmitting the generated legitimation token to the content provider

In an embodiment, the method may further comprise
- a step of generating, by the certificate authority, an identifier of the legitimation token;
- a step of transmitting the identifier of the legitimation token from the certificate authority to a security service platform;
- a step of generating, by the security service platform, an access token to access said digital content including said identifier of the legitimation token;
- a step of transmitting said access token from the security service platform to a user device.

In this way, the identifier of the legitimation token is embedded in the access token. This access token may be signed and optionally encrypted.

The present disclosure also concerns a method of transmitting a digital content to a user device through a content transmission network, wherein said digital content has been uploaded to said content transmission network according to the method previously defined, comprising the following steps performed by a transmission node of the content transmission network:
- receiving a request for said digital content or for a content segment of said digital content from the user device ;
- verifying if the received request includes an identifier of legitimation token;
- in a positive event, verifying if said identifier of legitimation token corresponds to a legitimation token for the requested content stored by the content transmission network;
- in a positive event, transmitting the requested content or content segment to the user device.

When the user device requests a content or content segment to a transmission node of the content transmission network, the identifier of legitimation token within the request allows to establish a link to the legitimation token of the requested content that certifies the legitimate character of the content. A pirate operator cannot provide user devices with identifiers of legitimation tokens for requested contents. The content or content segment requests from a user device that uses a pirate service do not include any identifier of legitimation token and are consequently rejected by the transmission node of the content transmission network.

In an embodiment, the method further comprises a step of extracting an access token from the received request; and
wherein verifying if the received request includes an identifier of legitimation token consists in verifying if the extracted access token includes an identifier of legitimation token.

The access token is a structure of data including data, also called claim(s), related to content access restriction(s) to the requested content, for example a location information (in case the distribution of the requested content is geographically restricted to an area). The identifier of legitimation token can be considered as another data related to content access restriction, since content access is restricted to legitimate contents to which a legitimation token has been assigned.

In an embodiment, the method further includes a step of verifying a digital signature and decrypting the extracted access token prior to verifying if said access token includes an identifier of legitimation token.

The digital signature of the access token ensures its integrity, and the encryption of the access token allows to protect the data included in the access token. In particular, it allows to keep secret the identifier of legitimation token.

In an embodiment, the method further includes the steps of:
- by the transmission node, retrieving the legitimation token corresponding to the identifier of legitimation token included in the received request, from a database of the content transmission network, and
- verifying the validity of the retrieved legitimation token, through the certificate authority.

Thus, the validity of the legitimation token can be verified again by the transmission node, for example through the certificate authority.

The present disclosure also concerns a content provider configured to perform the steps of the method previously defined.

The present disclosure also concerns a control node of a content transmission network responsible for transmitting contents to user devices, configured to
- receive from a content provider a digital content in association with a legitimation token, when said digital content is uploaded to said content transmission network according to the method previously defined;
- verify the validity of the received legitimation token; and
- only upon successful verification that the received legitimation token is valid, make the received content available to the content transmission network for transmission to user devices.

The present disclosure also concerns:
- a transmission node of a content transmission network responsible for transmitting contents to user devices, configured to perform the steps of the method previously defined;
- a content transmission network including a control node and one or more transmission nodes, as previously defined;
- a distributed system including one or more content providers as previously defined, a certificate authority configured to authenticate said one or more content providers and provide a legitimation token for a digital content on request from an authenticated content provider, and a content transmission network as above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a distributed system for uploading contents to a content distribution network and distributing contents to user devices through the content distribution network, according to an embodiment.
Figure 2 shows a flowchart of a process of uploading a content from a content provider to the content distribution network of figure 1, according to an embodiment.
Figure 3 shows a flowchart of a process of verifying the validity of a legitimation token for a content through a certificate authority, according to an embodiment.
Figure 4 shows a flowchart of a process of generating an access token for a content, according to an embodiment.
Figure 5 shows a flowchart of a process of transmitting content segments from the content distribution network to a user device, according to an embodiment.
Figure 6 shows a flowchart of a process of checking the validity of an access token, according to an embodiment.
Figure 7 shows a flowchart of a process of obtaining a legitimation token for a content, using a received identifier of legitimation token, according to an embodiment.

### DETAILED DESCRIPTION

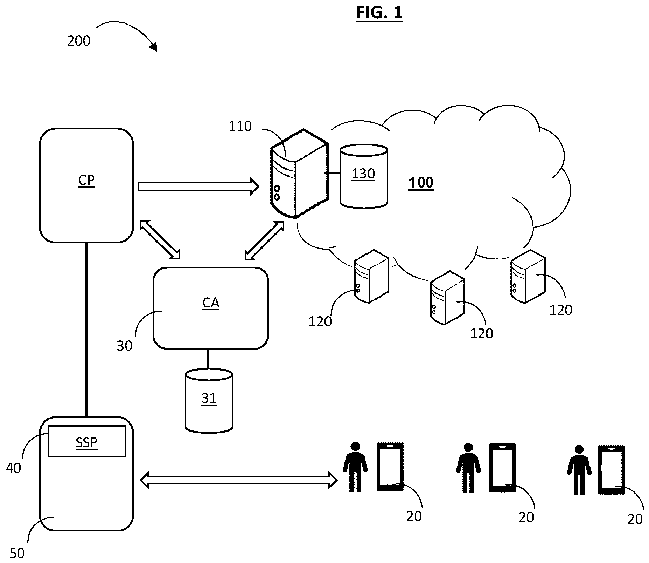

Figure 1 shows a distributed system 200 of uploading contents from a content provider CP to a content transmission network 100 and distributing or transmitting the contents to end user devices 20 through the content transmission network 100. The distributed system 200 may include one or more content providers CP, a certificate authority 30, and the content transmission network 100. For clarity reason, only one content provider CP is illustrated in figure 1 and will be described below.

The content provider CP is connected to the certificate authority 30 and to the content transmission network 100 through a communication network (not represented in figure 1), for example the Internet. For example, the content provider CP may provide a content streaming or content download service to end user devices 20. For example, a plurality of contents may be selectable by the end user devices 20 on a content platform 50 of the content provider CP and then distributed to the end user devices 20 through the content transmission network 100. The content provider CP has hardware and software to implement the steps of the method of uploading a content to a content transmission network 100, described later, that are performed by the content provider CP.

In the present disclosure, the term "content" refers to a digital content. The contents transmitted through the content transmission network 100 may include various types of contents such as video contents, audio contents, texts, graphics, scripts, data files, software, documents, applications, live streaming contents, on-demand streaming contents, etc...

The content transmission network or system 100 has the role of receiving contents from the content provider(s) CP, storing the received contents and transmitting the stored contents to end user devices 20. The content transmission network 100 has an upload interface to receive the contents from the content provider(s) CP, and a download interface to transmit the contents to the user devices 20. The transmission of contents to user devices 20 may be performed by streaming, downloading, broadcasting, or any other type of transmission method. In an embodiment, the content transmission network 100 may be a content delivery network, CDN.

In the description that follows, the content transmission network 100 is a content delivery network CDN. However, the present disclosure applies to any other type of content transmission network or system, for example to a download system or a broadcasting system.

The contents received by the CDN 100 may be encrypted with a content key, and optionally segmented into content segments.

In an embodiment, the content delivery network 100 may comprise an origin server 110, in the upload interface, and a plurality of edge servers or nodes 120 distributed over various locations, in the download interface.

The origin server 110 has the role of receiving contents provided by the content provider(s) CP and making said contents available for distribution to end user devices 20 over the content delivery network 100. For that purpose, the received contents may be stored in the content delivery network 100, in one or more central databases 130 or in a storage cloud system. The central database 130 or storage cloud system is accessible by the edge servers 120.

The edge servers 120 have the role of distributing the contents to end user devices 20 through a communication network, for example the Internet, not represented in figure 1. The edge servers 120 have a local database or memory to locally cache or store contents retrieved from the central database 130 or storage cloud system. The edge servers 120 have hardware and software to implement the steps of the method of transmitting contents to user devices 20, that are performed by the edge server 120.

The certificate authority 30 has the role of delivering legitimation tokens for contents provided by the content provider(s) CP.

Each content may be identified by a content tag that is uniquely assigned to said content. In other words, the content tag is unique per content. The content tag may include
- a content identifier, such as a content unique identifier, or
- a random number, or
- a serial number (serial numbers being assigned incrementally or sequentially to contents by a central authority, for example the certificate authority 30), or
- a date or timestamp information, or
- a combination of at least part of the above items (a content identifier, a random number, a serial number, a date or time stamped information).

In an embodiment, the content tag for each content may be generated by the certificate authority 30.

Each content provider CP may also be identified by a content provider identifier, for example a content provider unique identifier.

The legitimation token for a content A provided by a content provider CP, referred as Legit_TOK, contains the content tag TAG_A of the content A and the content provider identifier ID_CP of the content provider CP. The pair of content tag and content provider identifier (TAG_A, ID_CP) are associated within the legitimation token Legit_TOK. The legitimation token may be digitally signed, and optionally encrypted, by the certificate authority 30. A digital key is used by the certificate authority 30 to sign, an optionally encrypt, the legitimation token. It may be a secret or symmetric key Ks. The key Ks may be hold or stored by the certificate authority 30. In an embodiment, the key Ks may be generated by the certificate authority 30. The role of the legitimation token Legit_TOK is to establish a link between a content, such as the content A, and a content provider CP that is considered as legitimate to upload this content A to the content transmission network 100 for the purpose of transmitting the content A to end users through the content transmission network 100.

Optionally, the key Ks used by the certificate authority 30 to sign, an optionally encrypt, the legitimation tokens generated by the certificate authority 30 may depend on the content provider. In an embodiment, the certificate authority 30 may hold a plurality of secret keys KS1, KS2, ..., KSN, different from each other, respectively assigned to a plurality of content providers CP1, CP2, ..., CPN.

Alternatively, instead of a symmetric or secret key Ks, an asymmetric private key Kpr may be used by the certificate authority 30 to sign, and optionally encrypt, the legitimation tokens. This private key Kpr is associated with a public key Kpub of the certificate authority 30, said public key Kpub being used to verify the signature, and optionally decrypt, the legitimation tokens.

In an embodiment, the legitimation token Legit_TOK for the content A provided by the content provider CP is generated by the certificate authority 30 and transmitted to the content provider CP, upon successful authentication of the content provider CP by the certificate authority 30, as described later in more detail.

Authentication of a content provider is a process or action of verifying the identity of the content provider. In case of successful authentication, the content provider CP is trusted and considered legitimate to upload the content A to the content transmission network 100. In case of failed authentication, the content provider CP is not trusted and considered illegitimate to upload the content A to the content transmission network 100. The legitimation token Legit_TOK including the identifiers TAG_A and ID_CP of the content A and content provider CP may be defined as a content certificate attesting that the content provider CP is considered legitimate to transmit the content A to end user devices through the content transmission network 100.

The certificate authority 30 may include or have access to one or more databases 31, or a storage cloud system, storing information related to one or more content providers CP1, CP2, ..., CPN. The information related to each content provider may contain the information necessary to allow authentication of the content provider by the certificate authority 30. The type of this information depends on the type of authentication by the certificate authority 30 to authenticate the content providers CP. For example, in case of a password-based authentication, the information related to each content provider CP may include an identifier of the content provider CP and an associated password. In another example, in case of certificate-based authentication, the information related to each content provider CP may include a public key of the content provider CP. In that case, the certificate authority 30 may request a public key certificate of the content provider CP, also known as a digital certificate or identity certificate, and verify this certificate with the stored public key of the content provider CP. Any other type of authentication, including a multi-factor authentication, could be used by the certificate authority 30 to authenticate the content providers.

In an embodiment, the certificate authority 30 may also be responsible for checking the validity of legitimation tokens transmitted by nodes of the content transmission network 100. The validity check of a legitimation token may include verifying the signature of the legitimation token, and optionally decrypting the legitimation token.

The certificate authority 30 has hardware and software to implement those of the steps of the methods described below, that are performed by the certificated authority 30.

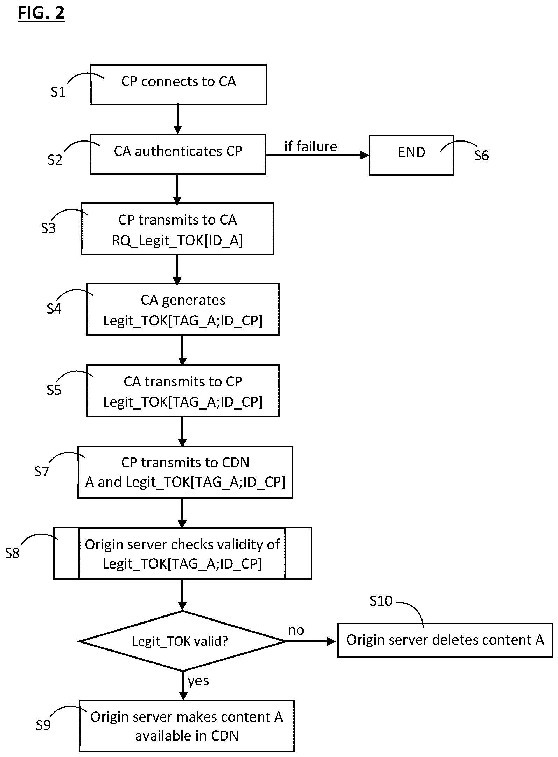

A method of uploading a content A from the content provider CP to the content transmission network 100, for example a CDN, according to an embodiment, is illustrated in figure 2 and will now be described.

To upload the content A from the content provider CP to the CDN 100, the content provider CP first gets a legitimation token Legit_TOK for the content A from the certificate authority 30, and then transmits the content A and the legitimation token Legit_TOK to the CDN 100. In an embodiment, the content A and the legitimation token Legit_TOK are transmitted together from the content provider CP to the CDN 100. Alternatively, the operation of transmitting the content A from the content provider CP to the CDN 100 and the operation of transmitting the legitimation token Legit_TOK from the content provider CP to the CDN 100 may be executed the two operations can be executed at different times, for example during a same communication session.

More precisely, in a step S1, the content provider CP may connect to the certificate authority 30 (CA) through a communication network, such as the Internet.

In a step S2, a process of authentication of the content provider CP by the certificate authority 30 may be executed. For example, in case of a password-based authentication, the content provider CP may transmit content provider credentials including a content provider identifier ID_CP and an associated password to the certificate authority 30. The certificate authority 30 may verify the received credentials, by searching for the received content provider identifier ID_CP in the database 31 and verifying if the received password matches the password stored in the database 31 in association with the content provider identifier ID_C. In another example, in case of a certificate-based authentication, the content provider CP may transmit its digital certificate to the certificate authority 30, and the certificate authority 30 may verify the received certificate with the public key of the content provider CP.

In case of successful authentication of the content provider CP by the certificate authority 30 in the step S2, the content provider CP may transmit a request RQ_Legit_TOK for a legitimation token for the content A to the certificate authority 30, in a step S3. Said request RQ_Legit_TOK may include an identifier ID_A of the content A, such as its content unique identifier. Advantageously, it is not needed to transmit the content A from the content provider CP to the certificate authority 30.

In response to the request RQ_Legit_TOK for a legitimation token for the content A from the content provider CP and upon successful authentication of the content provider CP by the certificate authority 30, the certificate authority 30 may generate the requested legitimation token Legit_TOK, in a step S4. Then, the certificate authority 30 may transmit the generated legitimation token Legit_TOK to the content provider CP, in a step S5.

The legitimation token Legit_TOK includes a content tag TAG_A of the content A together with the identifier ID_CP of the content provider CP. The content tag TAG_A of the content A may be generated by the certificate authority 30. The content tag is uniquely assigned to the content A. As previously described, the content tag TAG_A may include the content unique identifier ID_A, or a random number, or a serial number, or a timestamp or date information (for example, a timestamp information of reception of the request RQ_Legit_TOK for a legitimation token for the content A), or a combination of at least part of these items. The certificate authority 30 may store in memory the content unique identifier ID_A in association with the content tag TAG_A, in case the content tag TAG_A is different from ID_A.

In addition, the legitimation token Legit_TOK may be digitally signed by the certificate authority 30 with the secret key Ks of the certificate authority 30.

In another embodiment, the certificate authority 30 may use the secret key Ksi associated with the content provider CP to sign the legitimation token Legit_TOK.

In another embodiment, a pair of asymmetric keys (private key and public key) being assigned to the certificate authority 30, and the certificate authority 30 may use its private key to sign the legitimation token Legit_TOK.

The step S3 may be executed before the step of authentication S2. In all cases, the legitimation token Legit_TOK is transmitted to the content provider CP upon successful authentication of the content provider CP by the certificate authority 30.

In case that the authentication of the content provider CP by the certificate authority 30 has failed, the certificate authority 30 may end the communication with the content provider CP, in a step S6, and no legitimation token for the content A is provided to the content provider CP.

After reception of the legitimation token Legit_TOK for the content A, the content provider CP may transmit the content A and its legitimation token Legit_TOK to the CDN 100, in a step S7. In an embodiment, the content A and its legitimation token Legit_TOK are transmitted to the origin server 110 of the CDN 100, in the step S7.

In an embodiment, in the step S7, before uploading the content A and its legitimation token Legit_TOK to the CDN 100, the content provider CP may establish a secure communication session, or secure connection, with the CDN 100, for example with the origin server 110. During the establishment of the secure communication session, the content provider CP may be identified by the CDN 100, for example through an authentication process based on content provider identifier/password or certificate. The CDN 100, for example the origin server 110, may store in memory the content provider identifier for later use. Then, the content provider CP may transmit the content A and its legitimation token Legit_TOK to the CDN 100 during the secure communication session.

In an embodiment, the content A and its legitimation token Legit_TOK are transmitted together from the content provider CP to the CDN 100. Alternatively, the content A and its legitimation token Legit_TOK may be separately transmitted at different times, for example during the same communication session.

In a step S8, after reception of the content A and its legitimation token Legit_TOK by the CDN 110, a control node of the CDN 100, for example the origin server 110, may verify the validity of the received legitimation token Legit_TOK, before making the received content A available for distribution to end users.

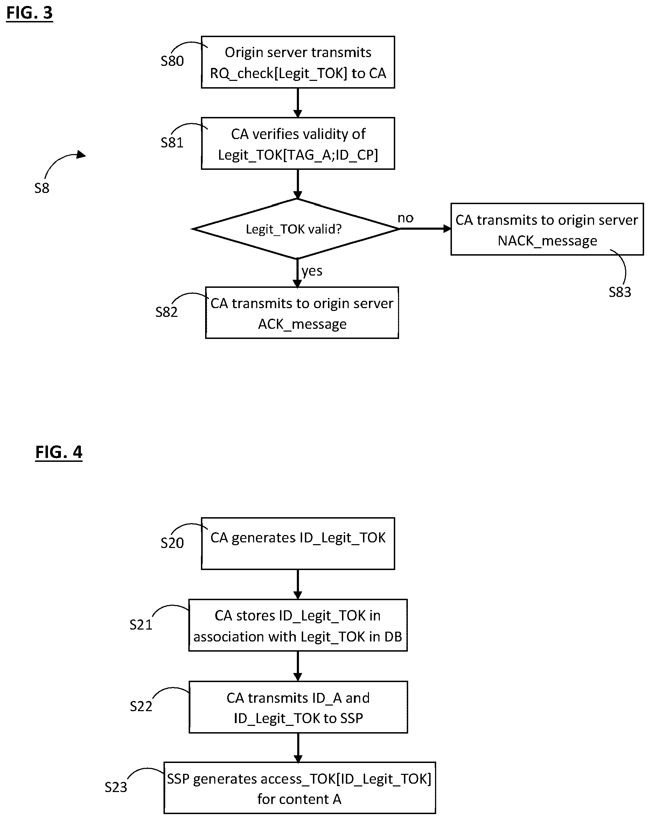

In an embodiment, the verification of the legitimation token Legit_TOK S8 may be performed through the certificate authority 30. In that case, as illustrated in figure 4, the origin server 110 may transmit a request RQ_check for verifying or checking the validity of the legitimation token Legit_TOK to the certificate authority 30, in a step S80. The request RQ_check includes the legitimation token Legit_TOK for the content A.

In a next step S81, the certificate authority 30 may check the validity of the legitimation token Legit_TOK by verifying the signature of the legitimation token Legit_TOK. For example, the certificate authority 30 may extract the content tag TAG_A and the identifier ID_CP of the content provider CP from the legitimation token Legit_TOK, then compute the digital signature of the extracted identifiers and check if the computed signature matches the signature of the received legitimation token Legit_TOK. If the two signatures match, the certificate authority 30 determines that the signature of the legitimation token Legit_TOK is valid. In that case, in a step S82, the certificate authority 30 may transmit an acknowledgment message ACK_message indicating that the transmitted legitimation token Legit_TOK is valid to the origin server 110, in response to the request RQ_check. If the signatures do not match, the certificate authority 30 determines that the signature of the legitimation token Legit_TOK is not valid, and transmits a non-acknowledgment message NACK_message indicating that the transmitted legitimation token Legit_TOK is not valid to the origin server 110, in response to the request RQ_check, in a step S83.

If the validity check S8 of the legitimation token Legit_TOK has been successful, the origin server 110 receives the acknowledgment message from the certificate authority (step S82) and then makes the received content A available on the CDN 100 for distribution to end user devices 20 by the edge servers 120, in a step S9. For that purpose, the origin server 110 may store the received content A together with the legitimation token Legit_TOK in the central content database 130, or in a CDN storage cloud system, accessible by the edge servers 120, and optionally cache the content A into at least part of the edge servers 120.

In case of failure of the validity check S8 of the legitimation token Legit_TOK, the origin server 110 does not make the received content A available on the CDN 100 for distribution to end user devices 20, in a step S10. For that purpose, the content A received from the content provider CP may be deleted and cannot be distributed to end user devices 20 over the CDN 100.

The legitimation token Legit_TOK is uniquely identified by an identifier ID_ Legit_TOK. For example, the identifier ID_ Legit_TOK of the legitimation token Legit_TOK may be a hash value of the legitimation token Legit_TOK or an identifier, such as a code or a random number, uniquely assigned to the legitimation token Legit_TOK by the certificate authority 30. The identifier ID_ Legit_TOK of the legitimation token Legit_TOK may be generated by the certificate authority 30, in a step S20. It may also be stored by the certificate authority 30, in association with the corresponding legitimation token Legit_TOK, for example in the database 31, in a step S21.

The identifier of the legitimation token ID_Legit_TOK may be transmitted together with the legitimation token Legit_TOK, from the certificate authority 30 to the content provider CP, in the step S5. Then, the identifier of the legitimation token ID_Legit_TOK may be transmitted from the content provider CP to the CDN 100, together with the legitimation token Legit_TOK, in the step S7.

Alternatively, in case the identifier of the legitimation token ID_Legit_TOK is computed from the legitimation token Legit_TOK (e.g., in case of a hash value), the content provider CP and/or the origin server 110 may compute it from the received legitimation token Legit_TOK.

In another embodiment (optional), before requesting the certificate authority 30 to check the legitimation token Legit_TOK, the origin server 110 may perform a first verification by comparing the content provider identifier received in the step S7 and the content provider identifier contained in the legitimation token Legit_TOK. If the content provider identifier extracted from the legitimation token Legit_TOK does not match the content provider identifier received from the content provider CP in the step S7, the origin server 110 does not make the received content A available on the CDN 100 for distribution to end user devices 20 (step S10). For that purpose, the content A received from the content provider CP may be deleted and cannot be distributed to end user devices 20 over the CDN 100. If the content provider identifier extracted from the legitimation token Legit_TOK matches the content provider identifier received from the content provider CP in the step S7, the step S8 of verifying the legitimation token Legit_TOK through the certificate authority 30 may be performed.

In an embodiment, the certificate authority 30 may then transmit the unique content identifier of the digital content ID_A and the identifier of the legitimation token ID_Legit_TOK to a security service platform (SSP) 40, in a step S22.

In an embodiment, the security service platform 40 is responsible for generating access tokens Access_TOK and providing user devices with access tokens Access_TOK to allow them to access the contents through the CDN 100.

A token may be a structure of data having a predetermined format. It may be a string of characters, according to a predetermined specification, that is encoded. For example, a token may be encoded based on a base 64 encoding, base 64 being a group of binary-to-text encoding schemes.

An access token Access_TOK to access a content includes data or information related to content access restrictions to access to said content. The access token Access_TOK may be digitally signed and/or encrypted by the security service platform 40 with a digital secret key KSSP, for example a symmetric secret key. The secret key KSSP may be shared by the service security platform 40 and the CDN 100. Alternatively, asymmetric cryptography may be used to sign and/or encrypt the access tokens.

In the present disclosure, the access token Access_TOK to access a content (e.g., the content A) provided by a content provider (e.g., the content provider CP), through the CDN 100, includes the identifier ID_Legit_TOK of the legitimation token Legit_TOK, that includes the content tag TAG_A of the content A and ID_CP of the content provider CP.

Optionally, the access token Access_TOK to access the content A may include other data related to content access restrictions, for example location data (in case access to the content is restricted to a given geographical area), and/or an expiration time limit, and/or a user device identifier, and/or an IP address, ...

After reception of the identifiers of the content A and of the legitimation token Legit_TOK in the step S22, the security service platform 40 may generate an access token Access_TOK to access the content A, including said identifier ID_ Legit_TOK of the legitimation token and optionally other data related to content access restrictions to access the content A, in a step S23.

To access a content through the CDN 100, a user device 20 may need to preliminarily obtain an access token for said content from the security service platform 40 and then transmit requests for segments of the requested content, together with said access token, to an edge server 120 of the CDN 100, as described later in more detail.

In an embodiment, the security service platform 40 may be implemented on a content platform 50 of the content provider CP. In an embodiment, the content platform 50 may have the roles of enabling the user devices 20 to select a content among a plurality of contents selectable on the content platform 50 of the content provider CP and, in response, providing the user devices 20 with a network address to access the selected content through the CDN 100, as well-known by the skilled person. In an embodiment, the content platform 50 may further have the role of authenticating the user devices 20. After a successful authentication of the user device 20 by the content platform 50, the user device 20 is considered legitimate to use the content streaming service of the content provider CP. In case of a failed authentication of the user device 20 by the content platform 50, the user device 20 is considered illegitimate to use the content streaming service of the content provider CP.

Alternatively, the security service platform 40 may be implemented on another system, server or platform, for example on a DRM license server.

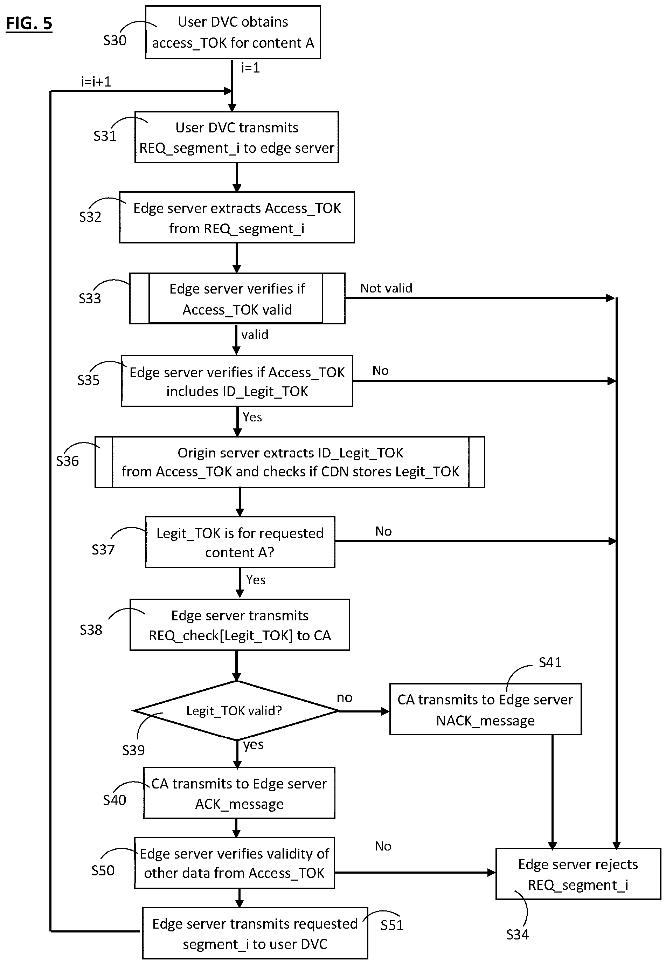

A method of transmitting a content, such as the content A, from the content provider CP to a user device 20 through the CDN 100, according to an embodiment, is illustrated in figure 5-5 and will now be described.

Let's consider that the content A has been uploaded from the content provider CP to the CDN 100 as previously described in reference to figures 2 and 3.

Before access to the content A, the user device (user DVC) 20 may first need to obtain an access token Access_TOK to access this content A. For example, this access token Access_TOK may be obtained from the security service platform 40 on the content platform 50, in a step S30. In other words, the access token Access_TOK may be transmitted from the security service platform 40 to the user device 20 in the step S30. For example, the access token Access_TOK may be transmitted to the user device 20 upon selection of the content A by the user device 20 on the content platform 50. The content platform 50 may require a successful authentication of the user device 20 prior to transmitting the access token Access_TOK.

As previously described, the access token Access_TOK to access the content A includes:
- the identifier ID_ Legit_TOK of the legitimation token Legit_TOK that includes the content tag TAG_A of the content A and the identifier ID_CP of the content provider CP
- and optionally other data related to content access restrictions.

In the present embodiment, the access token Access_TOK is digitally signed and encrypted with the secret key KSSP shared by the security service platform 40 and the CDN 100. The encryption of the access token Access_TOK allows to encrypt and protect the identifier of the legitimation token ID_ Legit_TOK that is preferably a data that should not be publicly distributed.

Then, the user device 20 may execute a process of downloading content segments of the content A that may include the steps S31 to S40, described below, executed in an iterative manner for each content segment of index i, segment_i.

For each content segment of index i, segment_i, the user device 20 transmits a content segment request REQ_segment_i to the edge server 120 of the CDN 100, in a step S31. Each content segment request REQ_segment_i for the segment_i of the content A may include a path information such as an URL address of the requested segment "segment_i" and the access token Access_TOK to access the content A. The access token Access_TOK can be inserted at different positions within the request REQ_segment_i, for example:
- in the path information or URL address of the requested segment_i; or
- in a header of the request; or
- as a query parameter at the end of the request.

Then, the edge server 120 receives the content segment request REQ_segment_i.

In a step S32, the edge server 120 extracts the access token Access_TOK from the received request REQ_segment_i.

In a step S33, the edge server 120 verifies if the access token Access_TOK is valid.

In the step S33, the edge server 120 may check the signature of the access token Access_TOK in a step S330 and decrypt the access token Access_TOK in a step S331. The edge server 120 uses the shared key KSSP to check the signature of the access token and decrypt it.

If the signature of the access token Access_TOK is not valid or the access token Access_TOK cannot be decrypted, the edge server 120 rejects the content segment request REQ_segment_i by not transmitting the requested segment_i, in a step S35. Optionally, the edge server 120 may send to the user device 20 a message indicating that the user device is unauthorized to access the content A.

If the signature of the access token Access_TOK is valid and the access token is successfully decrypted, the access token Access_TOK is considered valid in the step S33, and the edge server 120 may then verify if the access token Access_TOK includes an identifier of a legitimation token ID_ Legit_TOK, in a step S35.

If the access token Access_TOK extracted from the received request REQ_segment_i does not include an identifier of a legitimation token ID_ Legit_TOK, the edge server 120 may reject the content segment request REQ_segment_i, and optionally transmit a message indicating that access to the requested content A is unauthorized (step S34).

If the access token Access_TOK extracted from the received request REQ_segment_i includes an identifier of a legitimation token ID_ Legit_TOK, the edge server 120 extracts said identifier of legitimation token ID_Legit_TOK from the access token Access_TOK. Then, the edge server 120 may then verify if the CDN 100 has in memory a legitimation token Legit_TOK for the requested content A, corresponding to said identifier of legitimation token ID_ Legit_TOK, in a step S36.

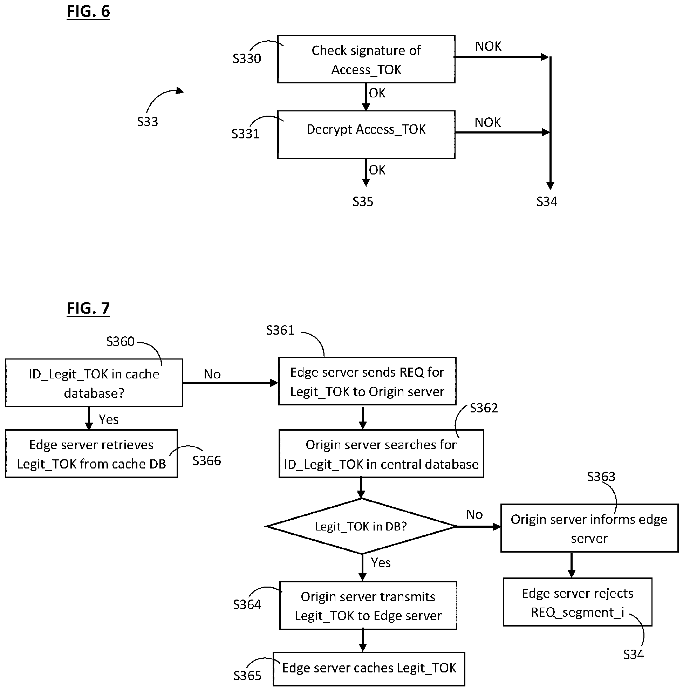

The legitimation token Legit_TOK for the content A may be cached by the edge server 120 or be centrally stored by the origin server 110 in the database 130. In an embodiment, the step S36 may include the steps S360 to S365 illustrated in figure 7 and described below.

In the step S360, the edge server 120 verifies if a legitimation token Legit_TOK for the content A corresponding to the identifier of legitimation token ID_Legit_TOK extracted from the received access token Access_TOK is cached by the edge server 120. For that purpose, the edge server 120 may search for the identifier of legitimation token ID_Legit_TOK in a cache database or memory of the edge server 120 storing locally a plurality of content legitimation tokens in association with their identifiers.

If the identifier of legitimation token ID_Legit_TOK can be found in the cache database or memory, the edge server 120 retrieves the associated legitimation token Legit_TOK from its cache database or memory, in a step S366.

If the identifier of legitimation token ID_Legit_TOK is not cached in the edge server 120, the edge server 120 sends a request for legitimation token, including the identifier of legitimation token ID_ Legit_TOK, to the origin server 110, in a step S361. Upon reception of this request, the origin server 110 searches for the received identifier of legitimation token ID_Legit_TOK in the central database 130, or cloud storage system, of the CDN 110 that stores the legitimation tokens together with their identifiers for the legitimate contents distributed over the CDN 100, in a step S362.

If the requested legitimation token is not stored in the central database 130, the origin server 110 transmits to the edge server 120 a message indicating that no legitimation token has been found for the received identifier of legitimation token ID_ Legit_TOK, in a step S363. Then, the edge server 120 may reject the content segment request RQ_segment_i and may send to the user device 20 a message indicating that the user device is unauthorized to access the content A (step S34).

If the requested legitimation token is stored in the central database 130, the origin server 110 transmits the requested legitimation token Legit_TOK to the edge server 120, in a step S364. The edge server 120 may cache the received legitimation token Legit_TOK in association with its identifier ID_Legit_TOK, for subsequent content segment requests, in a step S365.

After retrieving the legitimation token Legit_TOK corresponding to the received identifier ID_ Legit_TOK from the cache database in the step S366 or receiving it from the origin server 110 in the step S364, the edge server 120 may optionally first verify if the content tag TAG_A contained in the legitimation token Legit_TOK corresponds to the content A requested in the request REQ_segment_i, in a step S37. In case the content tag TAG_A includes the unique content identifier ID_A, the edge server 120 may verify that the content identifier of the content tag TAG_A matches the unique content identifier ID_A of the requested content A, known by the edge server 120. Alternatively, the edge server 120 may transmit a request for verifying if the content tag TAG_A contained in the legitimation token Legit_TOK corresponds to the requested content A to the certificate authority 30. For example, the request contains the content tag TAG_A, the content unique identifier ID_A and the identifier ID_CP of the content provider CP. In response to this request, the certificate authority 30 may transmit an acknowledgement or non-acknowledgement message to the edge server 120 depending on the outcome of the verification.

If the content tag contained in the legitimation token Legit_TOK obtained in the step S366 or S364 does not correspond to the requested content A, the edge server 120 may reject the content segment request RQ_segment_i (step S34) and optionally send to the user device 20 a message indicating that the user device is unauthorized to access the content A.

If the content tag contained in the legitimation token Legit_TOK obtained in the step S366 or S364 corresponds to the requested content A, the edge server 120 may optionally verify the validity of this legitimation token Legit_TOK.

The verification of the legitimation token Legit_TOK may be performed through the certificate authority 30. In that case, the edge server 120 may transmit a request RQ_check for verifying or checking the validity of the legitimation token Legit_TOK to the certificate authority 30, in a step S38. The request RQ_check includes the legitimation token Legit_TOK for the content A.

In a next step S39, the certificate authority 30 may check the validity of the legitimation token Legit_TOK by verifying the signature of the legitimation token Legit_TOK. For example, the certificate authority 30 may extract the content tag TAG_A and the identifier ID_CP of the content provider CP from the legitimation token Legit_TOK, then compute the digital signature of the extracted identifiers and check if the computed signature matches the signature of the received legitimation token Legit_TOK. If the two signatures match, the certificate authority 30 may determine that the signature of the legitimation token Legit_TOK is valid, and transmit an acknowledgment message indicating that the transmitted legitimation token Legit_TOK is valid to the edge server 120, in response to the request RQ_check, in a step S40. If the two signatures do not match, the certificate authority 30 determines that the signature of the legitimation token Legit_TOK is not valid, and transmits a non-acknowledgment message indicating that the transmitted legitimation token Legit_TOK is not valid to the edge server 120, in response to the request RQ_check, in a step S41.

If the validity check of the legitimation token Legit_TOK has failed (after step S41 in figure 5), the edge server 120 may reject the content segment request RQ_segment_i (step S34) and optionally send to the user device 20 a message indicating that the user device is unauthorized to access the content A.

The step of verifying the validity of the legitimation token Legit_TOK by the edge server 120 is optional. Indeed, if the content A has been previously uploaded with a legitimation token by the origin server 110, said legitimation token has already been validated by the origin server 110 in the step S8.

In another embodiment, the edge server 120 may verify if the content tag TAG_A contained in the legitimation token Legit_TOK corresponds to the requested content A and the validity of the legitimation token only for the first content segment requested for the content A, and then cache or store the legitimation token considered as valid in a local database for the subsequent content segments requested for the same content A.

If the received access token access_TOK includes other data, also called claim(s), related to access restrictions to the content A, the method may include another step S50 of verifying the validity of said other data, illustrated in figure 5. The step S50 may be performed after the step S40. However, it could be performed prior to or in parallel to the steps S36 to S40.

If the validity check S50 of the other data has failed, the edge server 120 may reject the content segment request RQ_segment_i and send to the user device 20 a message indicating that the user device is unauthorized to access the content A (step S34).

If the legitimation token Legit_TOK is valid (S40) and optionally the other data related to content access restrictions is also valid (S50:Yes), the edge server 120 may transmit the requested content segment segment_i to the user device 20, in a step S51.

Then, the steps previously described are reiterated for a next segment of index i+1.

The communication between the authenticated content provided CP and the certificate authority 30 may be secured by encryption of the messages exchanged between the content provider and the certificate authority with a digital key such as a shared secret key.

The present disclosure also concerns:
- a computer program comprising instructions which, when the program is executed by a computer, cause the computer to carry out the steps of the method, previously described, of uploading a content to the content transmission network, that are performed by the content provider;
- a computer program comprising instructions which, when the program is executed by a computer, cause the computer to carry out the steps of the method, previously described, of uploading a content to the content transmission network and the steps of the method, previously described, of transmitting a content to a user device through the content transmission network, which are performed by the certificate authority;
- a computer program comprising instructions which, when the program is executed by a computer, cause the computer to carry out the steps of the method, previously described, of uploading a content to the content transmission network and the steps of the method, previously described, of transmitting a content to a user device through the content transmission network, which are performed by the control node or origin server;
- a computer program comprising instructions which, when the program is executed by a computer, cause the computer to carry out the steps of the method, previously described, of transmitting a content to a user device through the content transmission network, which are performed by the transmission node or edge server.

## Claims

1. A method of uploading a digital content from a content provider (CP) to a content transmission network (100) responsible for transmitting contents to user devices (20), comprising the following steps:
- transmitting (S3) a request for a legitimation token (Legit_TOK) for said digital content (A) from the content provider (CP) to a certificate authority (30);
- upon successful authentication (S2) of the content provider (CP) by the certificate authority (30), receiving (S5) by the content provider (CP) the legitimation token (Legit_TOK) from the certificate authority (30), wherein said legitimation token (Legit_TOK) includes a content tag (TAG_A), uniquely assigned to the digital content, together with an identifier (ID_CP) of the content provider (CP) and is digitally signed by the certificate authority (30);
- uploading (S7) the digital content (A) and the legitimation token (Legit_TOK) for said digital content (A) from the content provider (CP) to the content transmission network (100).

2. The method according to claim 1, further comprising a step (S8) of verifying, by a control node (110) of the content transmission network (100), the validity of the received legitimation token (Legit_TOK) and, only if the received legitimation token (Legit_TOK) is valid, a step (S9) of making the received content available to the content transmission network (100) for transmission to user devices (20).

3. The method according to claim 2, wherein the step (S8) of verifying the validity of the legitimation token (Legit_TOK) includes transmitting (S80) the received legitimation token (Legit_TOK) to the certificate authority (30) with a request (REQ_check) for verifying the validity of said legitimation token (Legit_TOK) and, in response, receiving (S82) an acknowledgement of validity.

4. The method according to any of claims 1 to 3, wherein the request for a legitimation token (Legit_TOK) for said digital content (A) transmitted (S3) from the content provider (CP) to the certificate authority (30) includes an identifier of the digital content (A).

5. The method according to any of claims 1 to 4, further comprising, upon reception (S3) of the request for a legitimation token from the content provider (CP), a step of generating (S4), by the certificate authority (30), the requested legitimation token (Legit_TOK), prior to transmitting the generated legitimation token to the content provider (CP).

6. The method according to claim 5, further comprising
- a step of generating (S20), by the certificate authority (30), an identifier of the legitimation token (ID_Legit_TOK);
- a step (S22) of transmitting the identifier of the legitimation token (ID_Legit_TOK) from the certificate authority (30) to a security service platform (50);
- a step (S23) of generating, by the security service platform (50), an access token (Access_TOK) to access said digital content (A) including said identifier of the legitimation token (ID_Legit_TOK);
- a step (S30) of transmitting said access token from the security service platform (50) to a user device (20).

7. A method of transmitting a digital content (A) to a user device (20) through a content transmission network (100), wherein said digital content (A) has been uploaded to said content transmission network (100) according to the method defined in any of claims 1 to 6, comprising the following steps performed by a transmission node (120) of the content transmission network (100):
- receiving (S31) a request (REQ_segment_i) for said digital content (A) or for a content segment (segment_i) of said digital content (A) from the user device (20);
- verifying (S35) if the received request includes an identifier of legitimation token (ID_Legit_TOK);
- in a positive event, verifying (S36-S37) if said identifier of legitimation token (ID_Legit_TOK) corresponds to a legitimation token (Legit_TOK) for the requested content (A) stored by the content transmission network (100) ;
- in a positive event, transmitting (S51) the requested content or content segment to the user device (20).

8. The method according to claim 7, further comprising a step (S32) of extracting an access token (Access_TOK) from the received request; and wherein verifying (S35) if the received request includes an identifier of legitimation token (ID_Legit_TOK) consists in verifying if the extracted access token includes an identifier of legitimation token (ID_Legit_TOK).

9. The method according to claim 8, further including a step (S33) of verifying a digital signature and decrypting the extracted access token prior to verifying if said access token includes an identifier of legitimation token.

10. The method according to any of claims 7 to 9, further including the steps of:
- by the transmission node (120), retrieving (S366, S364) the legitimation token (Legit_TOK) corresponding to the identifier of legitimation token included in the received request, from a database of the content transmission network (100), and
- verifying the validity of the retrieved legitimation token (Legit_TOK), through the certificate authority (30).

11. A content provider (CP) configured to perform the steps of claim 1.

12. A control node (110) of a content transmission network (100) responsible for transmitting contents to user devices, configured to
- receive from a content provider a digital content in association with a legitimation token, when said digital content is uploaded to said content transmission network according to the method defined in claim 1;
- verify the validity of the received legitimation token; and
- only upon successful verification that the received legitimation token is valid, make the received content available to the content transmission network for transmission to user devices.

13. A transmission node (120) of a content transmission network responsible for transmitting contents to user devices, configured to perform the steps of claim 7.

14. A content transmission network (100) including a control node (110) according to claim 12 and one or more transmission nodes (120) according to claim 13.

15. A distributed system (200) including one or more content providers (CP) according to claim 11, a certificate authority (30) configured to authenticate said one or more content providers (CP) and provide a legitimation token for a digital content on request from an authenticated content provider, and a content transmission network (100) according to claim 14.
